# EUROPÄISCHE PATENTANMELDUNG

(11) **EP 1 645 363 A1**
(43) Veröffentlichungstag der Anmeldung: **12.04.2006**
(21) Anmeldenummer: 04023704.2
(22) Anmeldetag: 05.10.2004
(51) Int. Cl.: B24C 1/08, B24C 9/00

(54) **Verfahren und Vorrichtung zum Glätten der Oberfläche eines Bauteils**

(71) Anmelder: SIEMENS AKTIENGESELLSCHAFT, 80333 München (DE)
(72) Erfinder: Reich, Gerhard, 10717 Berlin (DE)

(57) **Zusammenfassung**

Es wird ein Verfahren zum Glätten der Oberfläche eines Bauteils (7) durch Strahlbehandlung mittels eines Feststoffpartikel enthaltenden Hochdruckfluidstrahls zur Verfügung gestellt, bei dem das Bauteil (7) während der Strahlbehandlung mit dem Hochdruckfluidstrahl in einem mit Fluid gefüllten Behälter (3) angeordnet ist.

## Beschreibung

Die vorliegende Erfindung betrifft ein Verfahren zum Glätten der Oberfläche eines Bauteils sowie eine Vorrichtung zum Glätten der Oberfläche eines Bauteils, die insbesondere zum Durchführen des erfindungsgemäßen Verfahrens geeignet ist.

Manche Bauteile moderner Anlagen, beispielsweise beschichtete Bauteile von Gasturbinen, werden einem Arbeitsschritt unterzogen, in dem die Oberfläche des Bauteils geglättet wird. So erfolgt beispielsweise nach dem Beschichten eines Turbinenbauteils eine Glättung, um die gewünschte Oberflächengüte zu erzielen. Die Beschichtungen können etwa Wärmedämmbeschichtungen (TBC, Thermal Barrier Coating) sein, die dazu dienen, um die Widerstandsfähigkeit der Turbinenschaufel gegen die beim Betrieb einer Gasturbine auftretenden hohen Temperaturen zu erhöhen und die Turbinenschaufel vor Oxidation bzw. Korrosion zu schützen. Als Wärmedämmbeschichtungen kommen z.B. auf Zirkon basierende Keramiken in Betracht. Um die Haftung keramischer Schichten auf zumeist metallischen Bauteilen zu verbessern, ist häufig noch eine Haftvermittlerschicht zwischen der Keramikschicht und dem metallischen Grundmaterial eines Bauteils vorhanden. Als Haftvermittlerschicht kommt häufig eine MCrAlY-Beschichtung zur Anwendung. In dieser Beschichtung, die eine metallische Legierung darstellt, steht Cr für Chrom, Al für Aluminium, Y für Yttrium oder ein Element der seltenen Erden und M für Eisen (Fe), Kobalt (Co) oder Nickel (Ni).

Bei den beschriebenen beschichteten Turbinenbauteilen ist es wichtig, dass beim Glätten ein gleichmäßiger Abtrag der Beschichtung erfolgt. Außerdem ist ein Durchglätten, d.h. ein übermäßiger Abtrag, bei dem die Beschichtung zumindest lokal vollständig abgetragen wird, zu vermeiden. Die beschichteten Turbinenbauteile werden daher von Hand geglättet. Zum Glätten der MCrA1Y-Beschichtung kommen dabei handgeführte Strahlanlagen bzw. Cut-Wire-Verfahren zur Anwendung. Die auf Zirkon basierende Wärmedämmschicht wird in der Regel von Hand mittels Schleifpapier im Wasserbecken geglättet.

Beim Glätten von Hand hängt jedoch die abschließende Oberflächengüte des Bauteils von den individuellen Fähigkeiten der glättenden Person ab. Fehler, welche die die Qualität der geglätteten Oberfläche negativ beeinflussen können nicht ausgeschlossen werden.

Aufgabe der vorliegenden Erfindung ist es daher, ein Verfahren und eine Vorrichtung zur Verfügung zu stellen, mit denen sich die Reproduzierbarkeit der Oberflächengüte verbessern lässt.

Die erste Aufgabe wird durch ein Verfahren zum Glätten der Oberfläche eines Bauteils nach Anspruch 1 sowie eine Vorrichtung zum Glätten der Oberfläche eines Bauteils nach Anspruch 12 gelöst. Die abhängigen Ansprüche enthalten vorteilhafte Ausgestaltungen des erfindungsgemäßen Verfahrens und der erfindungsgemäßen Vorrichtung.

Im erfindungsgemäßen Verfahren zum Glätten der Oberfläche eines Bauteils erfolgt eine Strahlbehandlung mit einem Feststoffpartikel enthaltenden Hochdruckfluidstrahl, insbesondere mit einem Hochdruckwasserstrahl, dem Feststoffpartikel beigemischt sind. Das erfindungsgemäße Verfahren zeichnet sich dadurch aus, dass das Bauteil während der Strahlbehandlung mit dem Hochdruckfluidstrahl in einem mit Fluid gefülltem Behälter angeordnet ist. Als Fluid kommt dabei insbesondere Wasser in Betracht, als Feststoffpartikel können beispielsweise Aluminiumoxidpartikel (Al₂O₃) Verwendung finden. Der Druck des Hochdruckfluidstrahls beträgt in diesem Fall vorzugsweise 320 bis 500 bar.

Vorzugsweise sind das Fluid im Behälter und das Fluid des Hochdruckfluidstrahls identisch.

Die vom Hochdruckfluidstrahl mitgerissenen Feststoffpartikel tragen beim Umströmen des Bauteils Beschichtungsmaterial ab. Mittels einer geeigneten Wahl des verwendeten Fluids und des Fluiddruckes lässt sich eine laminare Strömung um das Bauteil herum während des Strahlprozesses erzeugen und aufrechterhalten. Diese laminare Strömung ermöglicht ein reproduzierbares Abtragen der Oberfläche. Im mit Fluid gefüllten Behälter lässt sich das Glätten der Oberfläche daher gut reproduzierbar gestalten. Die mit dem Verfahren zu erzielende Oberflächengüte kann beispielsweise durch Einstellen der Dauer der Strahlbehandlung und/oder durch Wahl geeigneter Eigenschaften der verwendeten Feststoffpartikel festgelegt werden. Die Eigenschaften der Feststoffpartikel, die geeignet gewählt werden können, umfassen die Festigkeit, die Form, die Größe, etc. der Feststoffpartikel.

In einer vorteilhaften Ausgestaltung des Verfahrens werden das Bauteil und die Strahlrichtung des Hochdruckfluidstrahls, d.h. die Richtung, aus der der Hochdruckfluidstrahl auf das Bauteil gerichtet ist, während der Strahlbehandlung relativ zueinander bewegt. Dadurch kann die gesamte Bauteiloberfläche geglättet und der gewünschte Abtrag beim Glätten gesteuert werden.

Wenn das zu glättende Bauteil einen Hohlraum aufweist, ist es vorteilhaft, wenn der Hohlraum während der Strahlbehandlung von innen mit Fluid gespült wird. Durch das kontinuierliche Austreten von Fluid aus dem Inneren des Hohlraums lässt sich ein Eindringen von Feststoffpartikeln in den Hohlraum verhindern. Die Zufuhr des Fluids zum Spülen des Hohlraums kann beispielsweise über eine Halterung zum Halten des Bauteils während der Strahlbehandlung erfolgen.

In einer Weiterbildung des erfindungsgemäßen Verfahrens durchläuft das im Behälter befindliche Fluid und das durch den Hochdruckfluidstrahl zugeführte Fluid einen Fluidkreislauf, in dem die durch den Hochdruckfluidstrahl eingebrachten Feststoffpartikel herausgefiltert werden und das gefilterte Fluid anschließend wieder dem Behälter und/oder dem Hochdruckfluidstrahl zugeführt wird. Ebenso lassen sich die herausgefilterten Feststoffpartikel wieder dem Hochdruckfluidstrahl zuführen. Gegebenenfalls können die herausgefilterten Feststoffpartikel getrocknet und anschließend gesiebt werden, bevor sie dem Hochdruckfluidstrahl wieder zugeführt werden. Das Wiederverwenden des Fluids und/oder der Feststoffpartikel vermindert den Bedarf an Fluid und/oder an Feststoffpartikeln beim Durchführen des Verfahrens. Durch das Filtern des Fluids werden dabei neben den Feststoffpartikeln auch Verunreinigungen aus dem Fluid entfernt. Durch das Sieben können diese Verunreinigungen anschließend von den Feststoffpartikeln getrennt werden. Das Trocknen der Feststoffpartikel vor dem Sieben dient dabei dazu, ein aneinander Haften von Feststoffpartikeln und Verunreinigungen aufgrund eines flüssigen Fluids zu vermeiden.

Eine erfindungsgemäße Vorrichtung zum Glätten der Oberfläche eines Bauteils, die sich insbesondere zum Durchführen des erfindungsgemäßen Verfahrens eignet, umfasst einen mit Fluid füllbaren Fluidbehälter, eine im Fluidbehälter angeordnete Halterung zum Aufnehmen des zu glättenden Bauteils, eine Hochdruckfluiddüse zum Ausstoßen eines Hochdruckfluidstrahls in den Fluidbehälter und eine mit der Hochdruckfluiddüse verbundene Feststoffpartikelzufuhr zum Zuführen von Feststoffpartikeln in den Hochdruckfluidstrahl.

Insbesondere können die Halterung zum Aufnehmen des zu glättenden Bauteils und/oder die Hochdruckfluiddüse beweglich ausgestaltet sein, um eine Relativbewegung zwischen dem Bauteil und der Strahlrichtung, aus der der Hochdruckfluidstrahl auf das Bauteil gerichtet wird, zu ermöglichen.

In einer Weiterbildung der Vorrichtung umfasst der Fluidbehälter einen Fluidauslass, durch den das Fluid aus dem Behälter austreten kann und dem ein Filter zum Herausfiltern der Feststoffpartikel und/oder von Verunreinigungen aus dem Fluid nachgeschaltet ist. Das gefilterte Fluid kann anschließend dem Strahlvorgang wieder zugeführt werden. Die erfindungsgemäße Vorrichtung kann dazu eine Fluidleitung zwischen dem Filter und der Hochdruckfluidstrahl umfassen. In dieser Ausgestaltung ist ein sofortiges Wiederverwenden des gefilterten Fluids möglich. Alternativ kann das Fluid auch gesammelt werden und erst später erneuert werden. Ebenso wie das Fluid können auch die herausgefilterten Feststoffpartikel, gegebenenfalls nach einer Reinigung, dem Strahlvorgang sofort oder später wieder zugeführt werden.

In einer Weiterbildung der erfindungsgemäßen Vorrichtung umfasst diese eine Fluidzuführeinheit zum Zuführen von Fluid in einen Hohlraum eines zu glättenden Bauteils. Die Fluidzuführeinheit ermöglicht das Spülen des Hohlraumes, um ein Eindringen von Feststoffpartikeln beim Strahlvorgang in den Hohlraum zu verhindern. Die Fluidzuführeinheit kann insbesondere in die Halterung zum Halten des Bauteils integriert sein, sodass die Fluidzuführeinheit relativ zum Bauteil ortsfest ist.

In einer vorteilhaften Weiterbildung der erfindungsgemäßen Vorrichtung ist mindestens eine Abmessung der Hochdruckfluiddüse an mindestens eine Abmessung der glättenden Bauteile angepasst. Insbesondere kann die Vorrichtung auch die Möglichkeit bieten, dass die Düse ausgetauscht werden kann, sodass die Vorrichtung zum Glätten von Bauteilen mit unterschiedlichen Abmessungen Verwendung finden kann.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
Fig. 1 zeigt ein Ausführungsbeispiel für die erfindungsgemäße Vorrichtung zum Glätten der Oberfläche eines Bauteils in einer schematischen Darstellung.
Fig. 2 zeigt einen Schnitt durch die Vorrichtung entlang der Linie A-A aus Fig. 1.
Fig. 3 zeigt ein Detail aus Fig. 1 in einer vergrößerten Darstellung.
Fig 4. zeig beispielhaft eine Gasturbine in einem Längsteilschnitt.
Fig. 5 zeigt in perspektivischer Ansicht eine Laufschaufel oder Leitschaufel einer Strömungsmaschine.
Fig. 6 zeigt eine Brennkammer einer Gasturbine

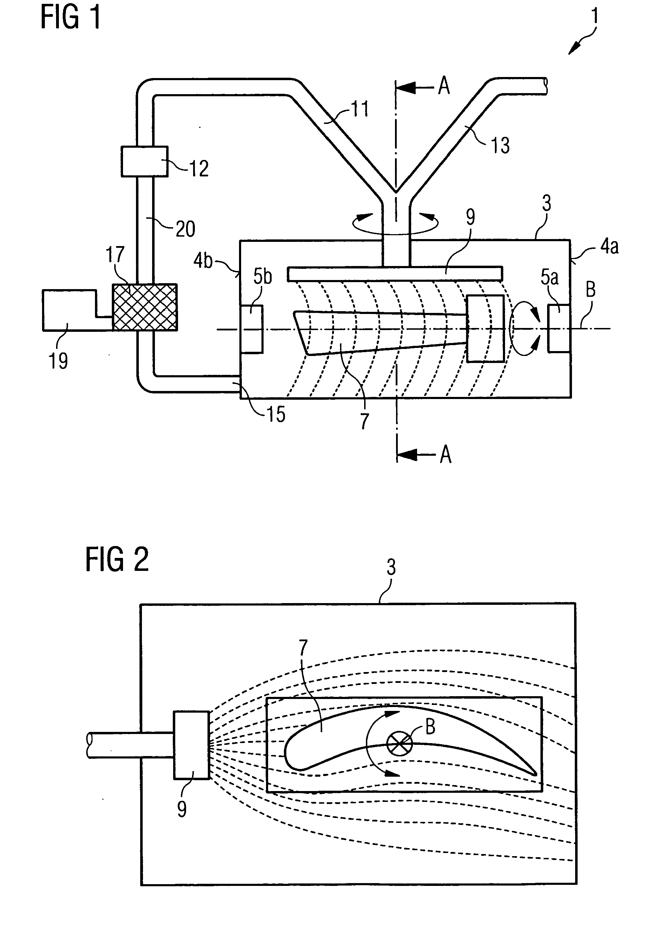

Eine erfindungsgemäße Vorrichtung zum Glätten der Oberfläche eines Bauteils ist in Figur 1 dargestellt. Die Vorrichtung umfasst als einen mit Fluid füllbaren Fluidbehälter einen Wasserbehälter 3, in welchem eine Halterung 5 zum Aufnehmen eines zu glättenden Turbinenbauteils, welches in Figur 1 als eine Turbinenschaufel 7 dargestellt ist, vorhanden ist. Außerdem umfasst sie als Hochdruckfluiddüse eine Wasserstrahldüse 9 zum Ausstoßen eines Hochdruckwasserstrahls.

Die Halterung 5 umfasst zwei Halter 5a, 5b. Diese sind in den Stirnflächen 4a, 4b angeordnet und derart ausgestaltet, dass sie die Turbinenschaufel 7 um die Achse B drehbar aufnehmen können. Relativ zu den Halterungen ist die Düse 9 derart angeordnet, dass ein aus ihr austretenden Wasserstrahl aus einer Richtung senkrecht zur Drehachse B auf die Turbinenschaufel 7 auftrifft (siehe auch Figur 2). Die Düse 9 selbst ist ebenfalls drehbar, nämlich um ihre Mittelachse, welche mit der Linie A-A aus Figur 1 zusammenfällt. Alternativ ist es auch möglich, die Halterung nicht drehbar auszugestalten und stattdessen eine Einrichtung vorzusehen, mittels derer sich die Düse 9 um die Drehachse B drehen lässt.

Die Düse 9 wird über eine Wasserzufuhr 11 mit Wasser versorgt, welches je nach Bedarf unter einem Druck von 320 bis 500 bar steht. Zum Aufbau dieses Druckes weist die Wasserzufuhr 11 eine Hochdruckpumpe 12 auf. Außerdem ist der Düse 9 eine Feststoffpartikelzufuhr 13 zugeordnet, welcher der Austrittsöffnung der Düse 9 vorgeschaltet ist und dazu dient, Feststoffpartikel dem der Düse 9 zugeführten Wasser beizumischen. Als Feststoffpartikel kommen im vorliegenden Ausführungsbeispiel Aluminiumoxid-Partikel (Al₂O₃-Partikel) zur Anwendung. Es können jedoch auch andere für Strahlbehandlungen von Bauteiloberflächen geeignete Partikel zur Anwendung kommen. Beim Betrieb der Düse 9 reißt das von der Wasserzufuhr 11 zugeführte Wasser die Feststoffpartikel mit sich, sodass diese zusammen mit dem Wasser unter hohem Druck aus der Düse 9 austreten.

Zum Glätten der Oberfläche des Turbinenbauteils 7, die beispielsweise die Oberfläche des metallischen Grundmaterials der Turbinenschaufel, die Oberfläche einer Haftvermittlerschicht oder die Oberfläche einer Wärmedämmbeschichtung sein kann, wird die Turbinenschaufel 7 zwischen die beiden Halter 5a und 5b eingespannt. Danach wird der Behälter 3 vollständig mit Wasser gefüllt und die Bestrahlung mittels des die Feststoffpartikel enthaltenden Hochdruckfluidstrahls wird aufgenommen. Während des Bestrahlens bildet sich eine laminare Strömung um die Turbinenschaufel 7 herum aus, in der die Feststoffpartikel Oberflächenmaterial der Turbinenschaufel 7 abtragen. Durch Bewegen der Schaufel 7 und der Düse 9 relativ zu einander kann dabei der Abtrag an Oberflächenmaterial gesteuert werden. Die zu erzielende Oberflächengüte kann über die Zeit, über die das Strahlen andauert, und/oder die verwendeten Feststoffpartikel eingestellt werden. Beispielsweise lassen sich mit kleineren Feststoffpartikeln glattere Oberflächen erzeugen als mit größeren Feststoffpartikeln. Auch die Form und die Härte der Feststoffpartikel sowie die Geschwindigkeit, mit der diese auf die Oberfläche auftreffen, haben einen Einfluss auf die Oberflächengüte.

Die Düse 9 erstreckt sich in Richtung parallel zur Achse B über eine Länge, welche der Abmessung der Turbinenschaufel 7 entlang der Achse B angepasst ist. Dadurch ist es möglich, die gesamte Turbinenschaufel in einem einzigen Arbeitsgang im Wesentlichen ohne Unterbrechung zu glätten, indem die Schaufel um die Achse B gedreht wird.

Über einen Abfluss 15 fließt Wasser aus dem geschlossenen Behälter 3 hinaus, sodass während des Strahlprozesses die im Behälter befindliche Wassermenge weitgehend konstant bleibt. Das aus dem Behälter austretende Wasser wird einem Filter 17 zugeführt, wo es von den Feststoffpartikeln und abgetragenem Oberflächenmaterial gereinigt wird. Das gereinigte Wasser wird anschließend über eine Fluidleitung 20 der Hochdruckpumpe 12 zugeführt und von dieser der Wasserzufuhr 11 wieder zugeleitet. Durch den so gebildeten geschlossenen Wasserkreislauf kann die beim Glätten benötigte Wassermenge beschränkt werden.

Die vom Filter 17 herausgefilterten Feststoffe werden in einem Abscheider 19 gesammelt. Nachdem das abgeschiedene Material getrocknet worden ist, wird es gesiebt, um die beim Strahlen verwendeten Feststoffpartikel von dem abgetragenen Beschichtungsmaterial zu trennen. Die Feststoffpartikel können dann dem Hochdruckwasserstrahl über die Partikelzufuhr 13 wieder zugeführt werden.

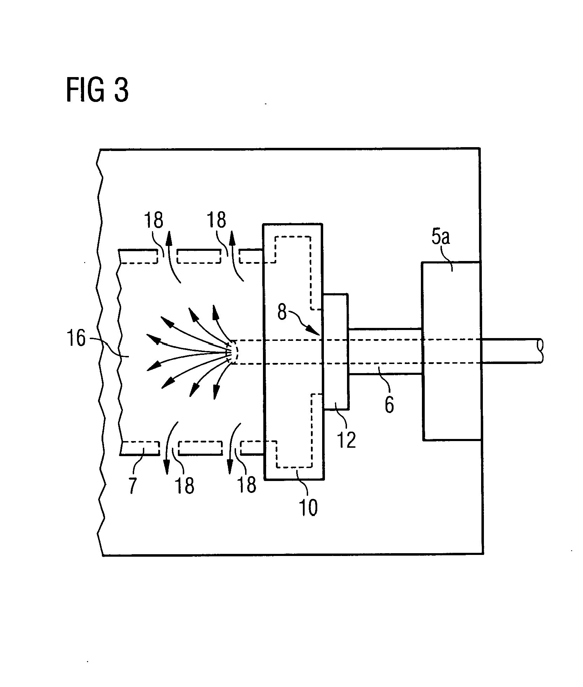

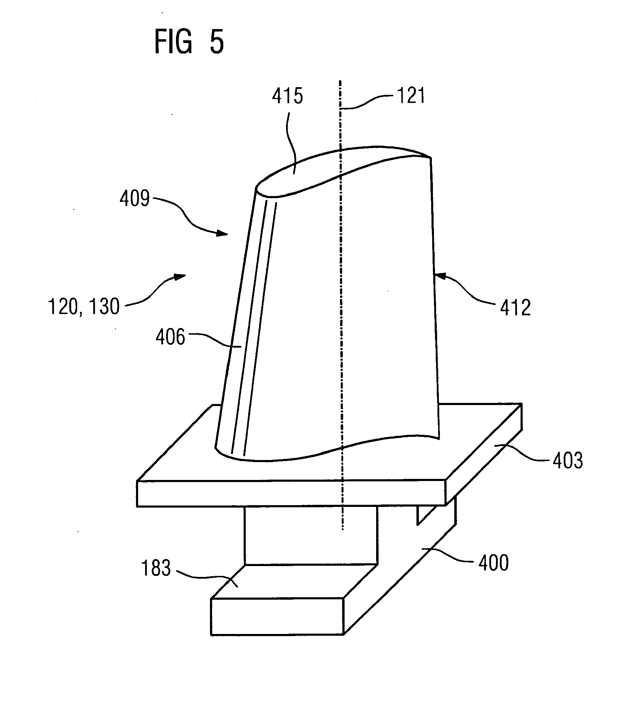

Häufig sind Turbinenschaufeln mit Hohlräumen 16 ausgestattet, welche Durchtrittsöffnungen 18 zur Oberfläche der Turbinenschaufel aufweisen (Fig.3). Die Hohlräume 16 und die Durchtrittsöffnungen 18 werden im Betrieb der Turbinenschaufel zum Ausblasen eines Kühlluftfilms benötigt. Um während der Strahlbehandlung ein Eindringen von Feststoffpartikeln in die Durchtrittsöffnungen 18 zu vermeiden, kann die Turbinenschaufel 7 von innen mit Wasser gespült werden. Dazu weist die Halterung 5 im vorliegenden Ausführungsbeispiel ein im Inneren der Halterung angeordnetes Zuführrohr 6 als eine Zuführeinheit zum Zuführen von Wasser auf. Der Druck des durch das Zuführrohr 6 in die Hohlräume 16 der Turbinenschaufel 7 zugeführten Wassers ist so hoch, dass dieses während der Strahlbehandlung kontinuierlich durch die Durchtrittsöffnungen 18 an der Oberfläche der Turbinenschaufel 7 austritt, sodass ein Eindringen der Feststoffpartikel in die Durchtrittsöffnungen 18 verhindert wird. Wenn der Befestigungsteil 10 der Turbinenschaufel 7 eine große Eintrittsöffnung 8für den Eintritt von Kühlluft aufweist, kann es vorteilhaft sein, wenn an der Halterung 5 ein Verschluss 12 zum Verschließen dieser großen Eintrittsöffnung 8 vorhanden ist. Dadurch kann sichergestellt werden, dass das in die Hohlräume 16 eingeführte Wasser nicht durch die große Eintrittsöffnung 8 wieder austritt, sondern durch die kleineren Durchtrittsöffnungen 18.

Die Erfindung wurde anhand eines Ausführungsbeispiels im Detail beschrieben. Von diesem Ausführungsbeispiel sind Abweichungen möglich. Beispielsweise können andere Fluide als Wasser Verwendung finden. So ist es etwa denkbar, Öle oder Gase zu verwenden. Die Strömungseigenschaften des verwendeten Fluids beeinflussen das Abtragen von Oberflächenmaterial während der Strahlbehandlung. Bei Verwendung von Flüssigkeiten lassen sich die Strömungseigenschaften unter anderem durch die Viskosität der gewählten Flüssigkeit beeinflussen.

Im Ausführungsbeispiel kann die Düse um eine Achse, die entlang der Linie A-A in Figur 1 verläuft, gedreht werden. Es ist jedoch auch möglich, dass der Düse weitere Freiheitsgrande der Bewegung zugeordnet sind. So ist etwa denkbar, dass die Düse parallel zur Behälterwand verschoben werden kann. Insbesondere ist es so möglich, auch mit Düsen, deren Abmessungen geringer als die Abmessungen des zu glättenden Bauteils sind, die gesamte Bauteiloberfläche zu glätten, indem die Düse relativ zur Bauteiloberfläche verschoben wird. Dasselbe Ziel kann erreicht werden, wenn die Halterung 5 derart ausgestaltet ist, dass das Bauteil im Behälter vorzugsweise in drei Dimensionen verschoben werden kann. Selbstverständlich ist es auch möglich, dass sowohl die Düse als auch das Bauteil verschoben werden können.

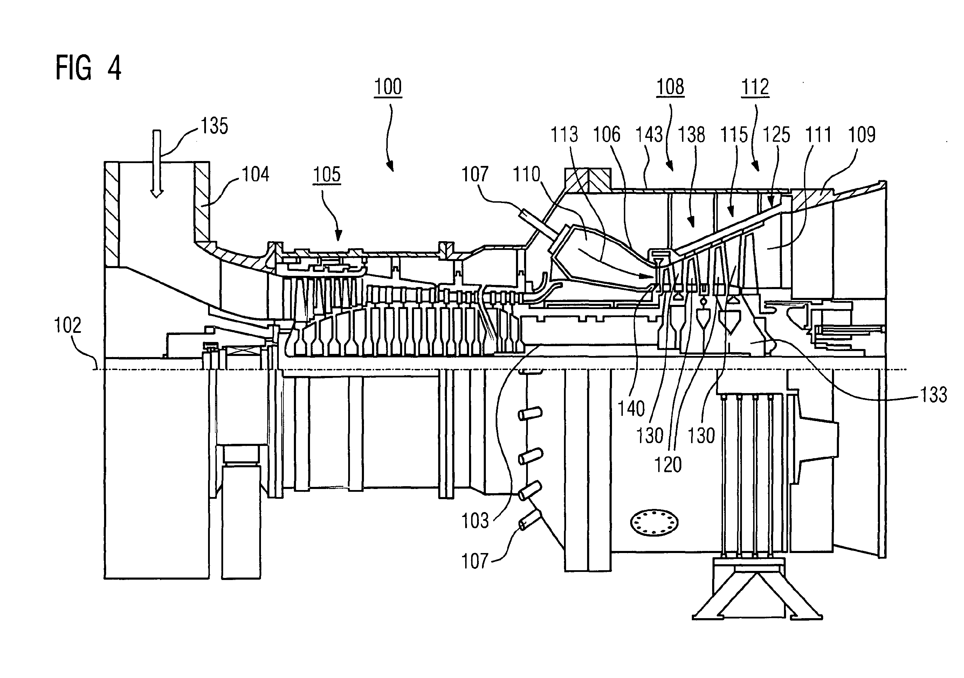

Da die beschriebene Erfindung in vorteilhafter Weise zum Glätten von Gasturbinenschaufeln zur Anwendung kommen kann, soll im Folgenden mit Bezug auf die Figuren 4 bis 6 ein kurzer Überblick über den Aufbau einer Gasturbine sowie einiger ihrer Materialeigenschaften gegeben werden:
Die Figur 4 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrA1X kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

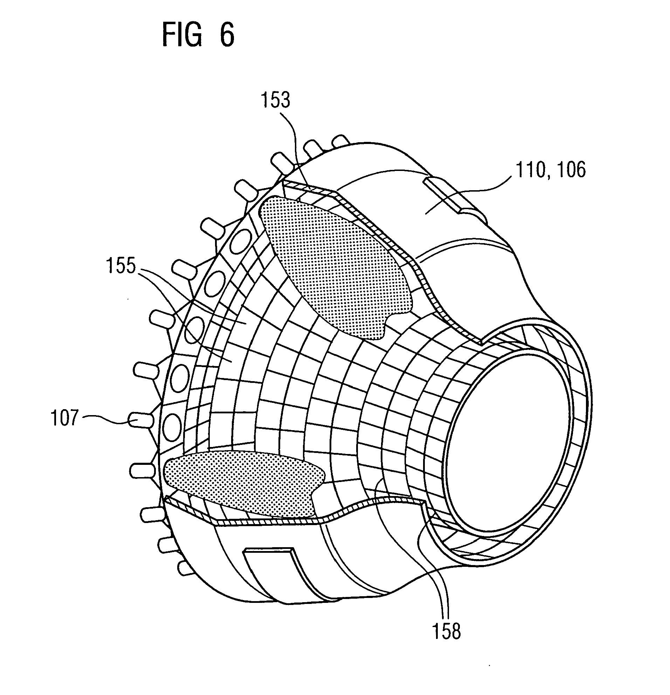

Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.
Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Verfahren zum Glätten der Oberfläche eines Bauteils (7) durch Strahlbehandlung mittels eines Feststoffpartikel enthaltenden Hochdruckfluidstrahls,
**dadurch gekennzeichnet, dass**
das Bauteil (7) während der Strahlbehandlung mit dem Hochdruckfluidstrahl in einem mit Fluid gefüllten Behälter (3) angeordnet ist.

2. Verfahren nach Anspruch 1,
**dadurch gekennzeichnet, dass**
die zu erzielende Oberflächengüte durch Einstellen der Dauer der Strahlbehandlung und/oder durch Wahl geeigneter Eigenschaften der verwendeten Feststoffpartikel festgelegt wird.

3. Verfahren nach Anspruch 1 oder 2,
**dadurch gekennzeichnet, dass**
das Bauteil (7) und die Strahlrichtung des Hochdruckfluidstrahls während der Strahlbehandlung relativ zueinander bewegt werden.

4. Verfahren nach einem der vorangehenden Ansprüche,
**dadurch gekennzeichnet, dass**
das Bauteil (7) einen Hohlraum (16) aufweist und der Hohlraum (16) während der Strahlbehandlung von Innen mit Fluid gespült wird.

5. Verfahren nach Anspruch 4,
**dadurch gekennzeichnet, dass**
die Zufuhr des Fluids zum Spülen des Hohlraums (16) durch eine Halterung (5) zum Halten des Bauteils (7) während der Strahlbehandlung erfolgt.

6. Verfahren nach einem der vorangehenden Ansprüche,
**dadurch gekennzeichnet, dass**
das im Behälter befindliche und/oder das durch den Hochdruckfluidstrahl zugeführte Fluid einen Fluidkreislauf durchläuft bzw. durchlaufen, in dem die durch den Hochdruckfluidstrahl eingebrachten Feststoffpartikel herausgefiltert werden und das gefilterte Fluid anschließend wieder dem Behälter (3) und/oder dem Hochdruckfluidstrahl zugeführt wird.

7. Verfahren nach Anspruch 6,
**dadurch gekennzeichnet, dass**
die herausgefilterten Feststoffpartikel dem Hochdruckfluidstrahl wieder zugeführt werden.

8. Verfahren nach Anspruch 7,
**dadurch gekennzeichnet, dass**
die herausgefilterten Feststoffpartikel getrocknet und anschließend gesiebt werden, bevor sie dem Hochdruckfluidstrahl wieder zugeführt werden.

9. Verfahren nach einem der vorangehenden Ansprüche,
**dadurch gekennzeichnet, dass**
Wasser als Fluid Verwendung findet.

10. Verfahren nach einem der vorangehenden Ansprüche,
**dadurch gekennzeichnet, dass**
Al₂O₃-Partikel als Feststoffpartikel Verwendung finden.

11. Verfahren nach Anspruch 10,
**dadurch gekennzeichnet, dass**
der Druck des Hochdruckfluidstrahls 320 bis 500 bar beträgt.

12. Vorrichtung zum Glätten der Oberfläche eines Bauteils (7), insbesondere gemäß dem Verfahren nach einem der Ansprüche 1 bis 11, mit:
- einem mit Fluid füllbaren Fluidbehälter (3);
- einer im Fluidbehälter (3) angeordneten Halterung (5) zum Aufnehmen des zu glättenden Bauteils (7);
- einer Hochdruckfluiddüse (9) zum Ausstoßen eines Hochdruckfluidstrahls in den Fluidbehälter (3); und
- einer mit der Hochdruckfluiddüse (9) verbundene Feststoffpartikelzufuhr (13) zum Zuführen von Feststoffpartikeln in den Hochdruckfluidstrahl.

13. Vorrichtung nach Anspruch 12, bei der die Halterung (15)beweglich ausgestaltet ist.

14. Vorrichtung nach Anspruch 12 oder 13, bei der die Hochdruckfluiddüse (9) beweglich ausgestaltet ist.

15. Vorrichtung nach einem der Ansprüche 12 bis 14, bei der der Fluidbehälter (3) eine Fluidauslass (15) aufweist, durch den Fluid aus dem Behälter (3) austreten kann und dem ein Filter (17) zum Herausfiltern der Faststoffpartikel und/oder von Verunreinigungen aus dem Fluid nachgeschaltet ist.

16. Vorrichtung nach Anspruch 15 mit einer zwischen dem Filter (17) und der Hochdruckfluiddüse (9) angeordneten Fluidleitung (20) zum Rückführen des gefilterten Fluids zur Hochdruckfluiddüse (9).

17. Vorrichtung nach einem der Ansprüche 12 bis 16, bei der eine Fluidzuführeinheit (6) zum Zuführen von Fluid in einen Hohlraum (16) eines zu glättenden Bauteils (7) vorhanden ist.

18. Vorrichtung nach Anspruch 17, bei der die Fluidzuführeinheit (6) in die Halterung (5) integriert ist.

19. Vorrichtung nach einem der Ansprüche 12 bis 18, bei der mindestens eine Abmessung der Hochdruckfluiddüse (9) an mindestens eine Abmessung der zu glättenden Bauteile (7) angepasst ist.

20. Vorrichtung nach Anspruch 19, bei der die Hochdruckfluiddüse (9) austauschbar ausgestaltet ist.

21. Verwendung des Verfahrens nach einem der Ansprüche 1 bis 11 oder einer Vorrichtung nach einem der Ansprüche 12 bis 20 zum Glätten von Turbinenschaufeln.
